# EUROPEAN PATENT APPLICATION

(11) **EP 3 489 295 A1**
(43) Date of publication of application: **29.05.2019**
(21) Application number: 17831096.7
(22) Date of filing: 20.07.2017
(51) Int. Cl.: C08L 21/00, C08K 3/04, C08L 101/00, E04B 1/94, E04B 5/16

(54) **FIRE-RESISTANT MOLDED OBJECT AND MOLDED ARTICLE INCLUDING FIRE-RESISTANT MOLDED OBJECT**

(30) Priority: 20.07.2016 JP 2016142653
(71) Applicant: Sekisui Chemical Co., Ltd., Osaka-shi, Osaka 530-8565 (JP)
(72) Inventor: SAWA, Kazuhiro, Mishima-gun Osaka 618-0021 (JP); YANO, Hideaki, Hasuda-shi Saitama 349-0198 (JP)
(74) Representative: Ter Meer Steinmeister & Partner
(86) International application number: PCT/JP2017/026267
(87) International publication number: WO 2018/016580

(57) **Abstract**

This invention relates to a fire-resistant molded object comprising an elastomer and thermally expandable graphite, in which when a section obtained by cutting the molded object in parallel to the MD of the molded object is examined with a microscope having a magnification of 100 times, the difference between the longitudinal direction of each piece of the thermally expandable graphite present in the section and the MD of the molded object is ± 10° or less.

## Description

### Technical Field

The present invention relates to a fire-resistant molded object and a molded article comprising the fire-resistant molded object.

### Background Art

To prevent fire spread from gaps of door frames and like other building materials in case of fire, products of airtight materials, such as construction gaskets to which fire-resistant performance is imparted, have been used. In order to prevent flame penetration, such products use a resin composition containing thermally expandable graphite that expands by heating.

Patent Literature 1, for example, discloses a fire spread prevention material that contains a resin layer including thermally expandable graphite. Patent Literature 2 discloses a fire-resistant resin composition in which the rate of thermally expandable layered inorganic materials that are oriented within ± 10° of parallel to the surface of a sheet is 60% or more.

### Citation List

### Patent Literature

PTL 1: JP2014-25310A
PTL 2: JP2002-114914A

### Summary of Invention

### Technical Problem

However, to provide the fire spread prevention material disclosed in PTL 1 with an expansion amount sufficient for filling a gap of a building material, a product requires a certain level of thickness, and there is a problem such that the thickness of the fire spread prevention material cannot be reduced. There is also another problem such that outgas is emitted from thermally expandable graphite during the molding of the fire spread prevention material, which easily causes blisters on the surface as viewed from the outside.

Further, although PTL 2 discloses that the thermally expandable graphite is oriented in parallel to the surface of the sheet, it merely teaches improvement of thermal expansion in the vertical direction of the thermal expandable fire-resistant sheet.

An object of the present invention is to provide a fire-resistant molded object having high expandability and excellent appearance performance.

### Solution to Problem

To solve the above problems, the present inventors focused on features of thermally expandable graphite. In thermally expandable graphite, an acid is inserted between layers of starting material graphite, and the acid is decomposed by heating to expand in the thickness direction of the graphite. The present inventors found that, to mold a fire-resistant composition comprising a thermoplastic resin or an elastomer, and thermally expandable graphite, the expansion rate in the thickness direction of the fire-resistant molded object can be increased by placing the thermally expandable graphite oriented in the flow direction (MD) of the fire-resistant composition. Thus, sufficient expandability and fire-resistant performance can be attained even when the fire-resistant molded object is designed to be thin. The present inventors moreover found that by molding a fire-resistant composition comprising a thermoplastic resin or an elastomer, and thermally expandable graphite, the thermally expandable graphite in the molded object is more accurately oriented in the MD, thus improving the appearance performance as an airtight material.

According to one embodiment of the technique disclosed herein, the following is provided. A fire-resistant molded object comprising a thermoplastic resin or an elastomer, and thermally expandable graphite, wherein when a section obtained by cutting the molded object in parallel to the machine direction (MD) of the molded object is examined with a microscope having a magnification of 100 times, the difference between the longitudinal direction of each piece of the thermally expandable graphite present in the section and the MD of the molded object is ± 10° or less.

In another embodiment of the fire-resistant molded object according to the technique disclosed herein, the number of blisters having a length of 1 mm or more in a 25-cm² area is 3 or less.

In another embodiment of the fire-resistant molded object according to the technique disclosed herein, the expansion rate is 15 times or more.

In another embodiment of the fire-resistant molded object according to the technique disclosed herein, the fire-resistant molded object comprises 3 to 300 parts by weight of the thermally expandable graphite, 3 to 300 parts by weight of a salt of phosphorus oxo acid, and 1 to 300 parts by weight of an inorganic filler, per 100 parts by weight of the thermoplastic resin or the elastomer.

In another embodiment of the fire-resistant molded object according to the technique disclosed herein, the elastomer is EPDM or TPO.

In another embodiment of the fire-resistant molded object according to the technique disclosed herein, the thermoplastic resin is polyvinyl chloride resin, chlorinated polyvinyl chloride resin, an ethylene-vinyl acetate copolymer, or a combination thereof.

In another embodiment of the fire-resistant molded object according to the technique disclosed herein, the fire-resistant molded object comprises a salt of phosphorus oxo acid.

In another embodiment of the fire-resistant molded object according to the technique disclosed herein, the salt of phosphorus oxo acid is phosphite.

In another embodiment of the technique disclosed herein, the thickness of the fire-resistant molded object is 1.5 mm or less.

In another embodiment according to the technique disclosed herein, a molded article comprising any one of the fire-resistant molded objects described above can be provided.

In another embodiment according to the technique disclosed herein, the molded article is a construction gasket.

In another embodiment according to the technique disclosed herein, the molded article is an extrusion molded article.

### Advantageous Effects of Invention

The present invention imparts fire resistance to a gap of a building material while maintaining excellent appearance.

### Brief Description of Drawings

Fig. 1 is a partial perspective view showing an example of the molded article of the present invention.
Fig. 2 is a partial sectional view showing a state in which the molded article of Fig. 1 is used.
Fig. 3 is a sectional view showing another example of the molded article of the present invention.
Fig. 4 is a sectional view showing another example of the molded article of the present invention.
Fig. 5 is a partial sectional view showing a state in which the molded article of Fig. 4 is used.
Fig. 6 shows experimental results of Example 1 and Comparative Example 1.

### Description of Embodiments

Hereinafter, the embodiments of the present invention are described with reference to the figures.

The present invention is a fire-resistant molded object comprising a thermoplastic resin or an elastomer, and thermally expandable graphite, wherein when a section obtained by cutting the molded object in parallel to the machine direction (MD) of the molded object is examined with a microscope having a magnification of 100 times, the difference between the longitudinal direction of each piece of the thermally expandable graphite present in the section and the MD of the molded object is ± 10° or less.

Components forming the fire-resistant molded object are first detailed. The fire-resistant molded object is formed of a fire-resistant composition containing a thermoplastic resin or an elastomer and thermally expandable graphite.

Examples of thermoplastic resins include those in which the thermoplastic resin is polyvinyl chloride resin, chlorinated polyvinyl chloride resin, an ethylene-vinyl acetate copolymer, fluororesin, polyphenylene ether, modified polyphenylene ether, polyphenylene sulphide, polycarbonate, polyether imide, polyether ether ketone, polyarylate, polyamide, polyamide imide, polybutadiene, polyimide, acrylic resin, polyacetal, polyamide, polyethylene, polyethylene terephthalate, polycarbonate, polyester, polystyrene, polyphenylene sulfide, polybutylene terephthalate, polypropylene, ABS resin, AS resin, or the like. In terms of fire resistance, the thermoplastic resin is preferably polyvinyl chloride resin, chlorinated polyvinyl chloride resin, an ethylene vinyl acetate copolymer, or a combination thereof.

Examples of elastomers include rubbers such as ethylene propylene rubber (EPM), ethylene propylene diene rubber (EPDM), chloroprene rubber (CR), and thermoplastic elastomers (TPE). Examples of thermoplastic elastomers include vinyl chloride-based thermoplastic elastomers, styrene-based thermoplastic elastomers, polyolefin-based thermoplastic elastomers (TPO), polyester-based thermoplastic elastomers, and the like. The elastomer is preferably EPDM or TPO since excellent weatherability and compressive permanent set required for an airtight material are attained.

The thermally expandable graphite is a conventionally known substance that is expanded upon heating. The thermally expandable graphite is produced as a graphite intercalation compound by treating a powder of natural flake graphite, pyrolytic graphite, kish graphite, or the like, with an inorganic acid such as concentrated sulfuric acid, nitric acid, and selenic acid, and a strong oxidant such as concentrated nitric acid, perchloric acid, perchlorate, permanganate, dichromate, and hydrogen peroxide. The thermally expandable graphite is a crystalline compound in which a carbon layer structure is maintained.

The thermally expandable graphite obtained by acid treatment may be further neutralized with ammonia, an aliphatic lower amine, an alkali metal compound, an alkaline earth metal compound, or the like.

The amount of the thermally expandable graphite is not particularly limited, and it is preferably 3 to 400 parts by weight, more preferably 3 to 300 parts by weight, even more preferably 5 to 300 parts by weight, and further more preferably 10 to 300 parts by weight, per 100 parts by weight of the thermoplastic resin or elastomer.

The expansion rate of the fire-resistant molded object is not particularly limited. The volume expansion rate after heating under heating conditions at 50 kW/m² for 30 minutes is preferably 3 to 50 times, more preferably 15 times or more, and even more preferably 15 times or more to 50 times or less. The fire-resistant molded object having an expansion rate of 15 times or more is desirable because it is thin and can be provided at a gap of a building material, and also because it expands upon heating to fill the gap, thus exhibiting fire-resistant performance.

The fire-resistant composition forming a fire-resistant molded object can further comprise a salt of phosphorus oxo acid and an inorganic filler.

The salt of phosphorus oxo acid is added to prevent the residue of the fire-resistant composition generated after the combustion from collapsing, more specifically, to maintain the shape of the residue. Examples of "phosphorus oxo acid" include phosphoric acid (also referred to as ortho-phosphoric acid), phosphorous acid, phosphonic acid, hypophosphorous acid (also referred to as phosphinic acid), and polyphosphoric acid (also referred to as metaphosphoric acid). Examples of salts of phosphorus oxo acid include alkali metal salts, alkaline-earth metal salts, aluminum salts, zinc salts, or ammonium salts of phosphorus oxo acid, and combinations thereof.

Among the examples of salts of phosphorus oxo acid, phosphites are preferable in terms of the small particle diameter and easy dispersion in the thermoplastic resin or elastomer, as well as the high degree of shape-maintaining properties after the expansion.

The amount of the salt of phosphorus oxo acid in the fire-resistant composition is not particularly limited. The amount of the salt of phosphorus oxo acid is preferably 3 to 300 parts by weight, more preferably 5 to 300 parts by weight, and even more preferably 10 to 200 parts by weight, per 100 parts by weight of the thermoplastic resin or elastomer. When the amount of the salt of phosphorus oxo acid in the fire-resistant composition is 3 parts by weight or more, a stable shape of the residue after the combustion of the fire-resistant composition can be ensured. When the amount of the salt of phosphorus oxo acid is 300 parts by weight or less, the moldability and the tensile elongation of the fire-resistant composition will not easily deteriorate.

The inorganic filler increases the heat capacity and suppresses the heat transmission when an expandable heat-insulating layer is formed, and acts as an aggregate to increase the strength of the expandable heat-insulating layer. The inorganic fillers are not particularly limited and examples thereof include metal oxides such as alumina, zinc oxide, titanium oxide, calcium oxide, magnesium oxide, iron oxide, tin oxide, antimony oxide, and ferrite; metal hydroxides such as calcium hydroxide, magnesium hydroxide, aluminum hydroxide, and hydrotalcite; metal carboxylates such as basic magnesium carbonate, calcium carbonate, magnesium carbonate, zinc carbonate, strontium carbonate, and barium carbonate; inorganic phosphates as a flame retardant; calcium salts such as calcium sulfate, gypsum fiber, and calcium silicate; as well as silica, diatomaceous earth, dawsonite, barium sulfate, talc, clay, mica, montmorillonite, bentonite, activated clay, sepiolite, imogolite, sericite, glass fiber, glass bead, silica balloon, aluminum nitride, boron nitride, silicon nitride, carbon black, glaphite, carbon fiber, carbon balloon, charcoal powder, various types of metal powder, potassium titanate, magnesium sulfate, lead zirconium titanate, zinc stearate, calcium stearate, aluminum borate, molybdenum sulfide, silicon carbide, stainless steel fiber, zinc borate, various types of magnetic powder, slag fiber, fly ash, dehydrated sludge, and the like. These inorganic fillers may be used singly or in a combination of two or more.

The amount of the inorganic filler is not particularly limited, and it is preferably in the range of 1 to 400 parts by weight, more preferably 30 to 400 parts by weight, and even more preferably 30 to 200 parts by weight, per 100 parts by weight of the thermoplastic resin or elastomer.

In one embodiment, the fire-resistant molded object or the fire-resistant composition forming the fire-resistant molded object comprises 3 to 300 parts by weight of thermally expandable graphite, 3 to 300 parts by weight of a salt of phosphorus oxo acid, and 1 to 300 parts by weight of an inorganic filler, per 100 parts by weight of the thermoplastic resin or elastomer. In another embodiment, the fire-resistant molded object or the fire-resistant composition forming the fire-resistant molded object comprises 5 to 300 parts by weight of thermally expandable graphite, 5 to 300 parts by weight of a salt of phosphorus oxo acid, and 30 to 400 parts by weight of an inorganic filler, per 100 parts by weight of the thermoplastic resin or elastomer. According to such composition, the fire-resistant molded object exhibits fire-resistant properties, and forms an excellent molded article used as a construction airtight material.

As long as the object of the present invention is not impaired, the fire-resistant molded object or the fire-resistant composition forming the fire-resistant molded object can optionally comprise a plasticizer, a phosphorus compound (except for a salt of phosphorus oxo acid and a plasticizer), an additive such as an antioxidant, a metal toxicity inhibitor, an antistatic agent, a stabilizer, a crosslinking agent, a lubricant, a softening agent, a pigment, a tackifier resin, a molding auxiliary material, and a tackifier such as polybutene and petroleum resin.

The fire-resistant molded object of the present invention can be obtained by mixing and kneading components of the fire-resistant composition detailed above using a known apparatus such as a single-screw extruder, a twin-screw extruder, a Banbury mixer, a kneader mixer, a kneading roll, a Raikai mixer, or a planetary stirrer, and by molding the resultant. Examples of molding include extrusion molding, press molding, calendar molding, and the like. Extrusion molding is preferable to attain more accurate orientation of the expandable graphite along the flow direction (MD) of the thermoplastic resin or elastomer. Further, extrusion molding ensures the formation of a molded article suitably used as a construction airtight material that fills a gap of a building material to provide an airtight or liquid tight state.

In the fire-resistant molded object of the present invention, when a section obtained by cutting the molded object in parallel to the machine direction (MD) of the molded object is examined with a microscope having a magnification of 100 times, the difference between the longitudinal direction of each piece of the thermally expandable graphite present in the section and the MD of the molded object is ± 10° or less. Accordingly, the fire-resistant molded object exhibits excellent thermal expandability in the thickness direction perpendicular to the MD.

The thickness of the fire-resistant molded object is not limited, and it is, for example, 0.5 mm or more to 2.0 mm or less, and preferably 1.5 mm or less. The fire-resistant molded object having a thickness of 0.5 mm or more to 2.0 mm or less is preferably used as an airtight material. The fire-resistant molded object having a thickness of 1.5 mm or less attains reduced flexural rigidity, which allows the quality and cost of the airtight material to be advantageously designed.

The fire-resistant molded object of the present invention has excellent surface appearance. The number of blisters having a length of 1 mm or more in a 25-cm² area is preferably 3 or less, and more preferably 0. A 25-cm² area of the fire-resistant molded object in which blisters are counted is not particularly limited as long as it is on the surface of the fire-resistant molded object. A 25-cm² area may be an area of 5 cm x 5 cm of a planar portion or an area of a total of 25 cm² on a rough surface.

The fire-resistant molded object of the present invention can be used for a molded article singly or in a composite form with other parts.

For example, a molded article may comprise an expandable fire-resistant molded object, which is the fire-resistant molded object of the present invention, and a non-expandable molded object. Examples of materials forming a non-expandable molded object may include resins, elastomers, and combinations thereof. Examples of resins include thermoplastic resins and thermosetting resins. Examples of thermoplastic resins include those in which a thermoplastic resin is polyvinyl chloride resin, chlorinated polyvinyl chloride resin, an ethylene-vinyl acetate copolymer, fluororesin, polyphenylene ether, modified polyphenylene ether, polyphenylene sulphide, polycarbonate, polyether imide, polyether ether ketone, polyarylate, polyamide, polyamide imide, polybutadiene, polyimide, acrylic resin, polyacetal, polyamide, polyethylene, polyethylene terephthalate, polycarbonate, polyester, polystyrene, polyphenylene sulfide, polybutylene terephthalate, polypropylene, ABS resin, AS resin, and the like. Examples of thermosetting resins include epoxy resins, phenol resins, melamine resins, urea resins, unsaturated polyester resins, alkyd resins, polyurethane, thermosetting polyimide, and the like. Examples of elastomers include rubbers, such as ethylene propylene rubber (EPM), ethylene propylene diene rubber (EPDM), chloroprene rubber (CR), and thermoplastic elastomers (TPE). Examples of thermoplastic elastomers include vinyl chloride-based thermoplastic elastomers, styrene-based thermoplastic elastomers, polyolefin-based thermoplastic elastomers (TPO), polyester-based thermoplastic elastomers, and the like. Among these, in terms of multicolor molding capability, polyvinyl chloride resin, chlorinated polyvinyl chloride resin, ethylene-vinyl acetate copolymer, ethylene propylene diene rubber (EPDM), chloroprene rubber (CR), thermoplastic elastomers (TPE), and silicone rubber are preferable.

Since the fire-resistant molded object or the molded article comprising thereof according to the present invention is produced by extrusion molding of a fire-resistant composition comprising a thermoplastic resin or an elastomer, it is easily affected by resin flow inside a metallic mold and deformed by elongation when being pulled off. Accordingly, the thermally expandable graphite of the molded article is more accurately oriented in the MD, and appearance performance as an airtight material is improved.

Further, regarding the fire-resistant molded object and the molded article comprising thereof according to the present invention, since the thermally expandable graphite contained in the molded object is more accurately oriented in the MD, outgas to be emitted from the thermally expandable graphite can be reduced.

The molded article of the present invention is preferably an extrusion molded article. In the extrusion molded article, the difference between the longitudinal direction of expandable graphite and the MD can be more easily set to ±10° or less, and fire-resistant properties and good appearance performance can be exhibited.

Use of the extrusion molded article is not particularly limited, and it is, for example, used as a construction airtight material. The construction airtight material is generally used for making a gap of a single building material or a gap sectioned between two or more building materials airtight in a normal state and/or upon heating. Examples of the "building material" include, but are not limited to, arbitrary materials used for construction, such as structures including walls, floors, bricks, roofs, and boards; and fittings such as windows (including sliding windows, opening windows, and raising and lowering windows), *shoji* (paper sliding doors), doors, *fusuma* (Japanese sliding screens), and *ramma* (transoms); wiring; and pipes.

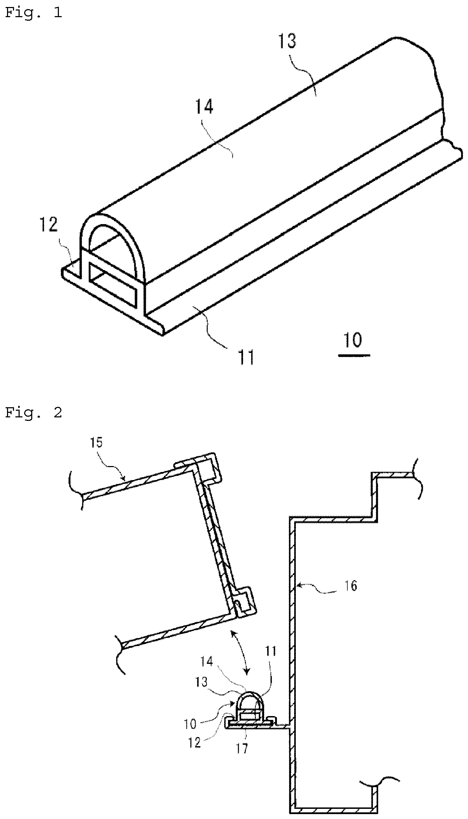

Fig. 1 shows an example of the molded article of the present invention. Fig. 1 shows a construction gasket 10 used as a construction airtight material. The gasket 10 includes a main body 11 constituted of the fire-resistant molded object of the present invention, and a protrusion 13 made of a composition of a non-expandable thermoplastic resin, such as a vinyl chloride resin. The main body 11 includes fixing parts 12, and the protrusion 13 includes a bending part 14.

Fig. 2 is a partial sectional view describing a state in which the construction gasket 10 of Fig. 1 is used in a door. A door 15 shown in Fig. 2 can be opened or closed for a frame 16. When the door 15 comes in contact with the frame 16, the door 15 will come in contact with the bending part 14 of the protrusion 13 in the gasket 10.

The fixing parts 12 of the main body 11 in the gasket 10 are inserted in a groove 17 at one side of the frame 16. By inserting the fixing parts 12 in the groove 17, the gasket 10 is fixed to the frame 16. Thus, the gasket 10 fills the gap between the door 15 and the frame 16.

The gasket 10 can be molded by co-extrusion of the main body 11 and the protrusion 13.

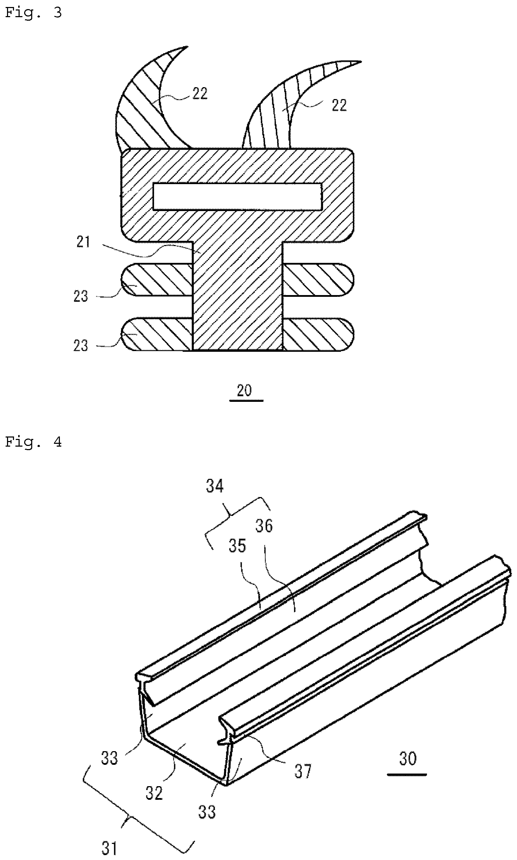

Fig. 3 shows another example of the molded article of the present invention. Fig. 3 shows a construction gasket 20 used as a construction airtight material. The gasket 20 comprises a main body 21 constituted of the fire-resistant molded object of the present invention, a pair of protrusions 22 that are extended from the upper end of the main body 21 and are made of a composition of a non-expandable thermoplastic resin, such as vinyl chloride resin, and two extension parts 23 that are extended from the base of the main body 21 and are made of a composition of a non-expandable thermoplastic resin, such as vinyl chloride resin.

The gasket 20 can be molded by co-extrusion of the main body 21, protrusions 22, and extension parts 23.

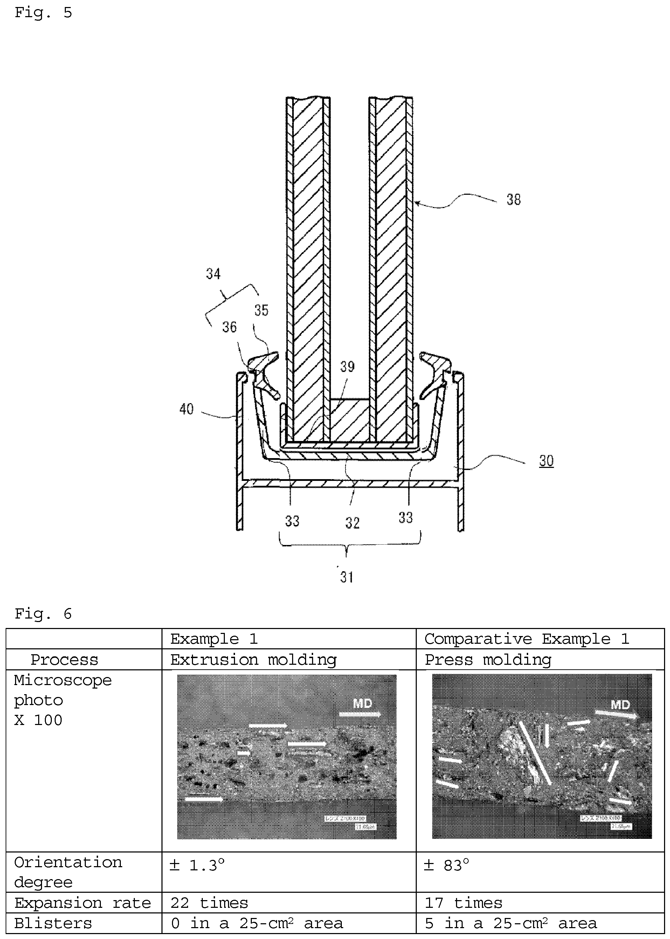

Figs. 4 and 5 each show another example of the molded article of the present invention. Fig. 4 shows a glazing channel type construction gasket 30 that is mounted in the periphery of a glass panel 38 (refer to Fig. 5). Fig. 5 is a sectional view describing a state in which the gasket 30 of Fig. 4 is used in the glass panel.

The gasket 30 comprises a bottom wall 32 oppositely facing an end surface 39 of the glass panel 38, and side walls 33 that are continuously formed with the bottom wall 32 at both sides of the bottom wall 32 and that cover the glass panel periphery 40 along the longitudinal direction of the glass panel end surface 39. The bottom wall 32 and side walls 33 form the main body 31 of the gasket 30. The main body 31 is made of a non-expandable thermoplastic resin composition, such as a vinyl chloride resin composition.

A protrusion 34 is formed on the upper end of each side wall 33. Each protrusion 34 has an outside fillet 35 and an inside fillet 36 that are projected toward the inside, i.e., the side of the glass panel 38.

Each protrusion 34 includes a groove 37 outside, i.e., a side opposite to the glass panel side. By inserting the ends of a sash in the grooves 37, the gasket 30 can be fixed to the sash. The protrusions 34 are constituted of the fire-resistant molded object of the present invention.

The gasket 30 can be molded by co-extrusion of the main body 31 and the protrusions 34.

Although the present invention is explained with reference to the above embodiments, it is not limited to the above, and various modifications as described below are possible.

The gaskets 10 in Figs. 1 and 2, gasket 20 in Fig. 3, and gaskets 30 in Figs. 4 and 5 are examples in which the main bodies 11, 21, and 31 of the gasket 10, 20 and 30 are made of a material different from that of protrusions 13, 23, and 34; however, the gaskets 10, 20, and 30 can be entirely formed of the fire-resistant molded object of the present invention.

As long as the fire-resistant molded object of the present invention is used, the gasket can take any configuration other than the gaskets 10 shown in Figs. 1 and 2, gasket 20 shown in Fig. 3, and gaskets 30 shown in Figs. 4 and 5.

Embodiments of the present invention are specifically described above; however, the present invention is not limited to these embodiments, and various modifications may be made based on the technical concept of the present invention.

For example, the configurations, methods, processes, shapes, materials, numerical values, and the like described in the embodiments above are merely examples, and configurations, methods, processes, shapes, materials, numerical values, and the like different from the above may also be used as necessary. In addition, the configurations, methods, processes, shapes, materials, numerical values, and the like described in the embodiments can be combined with each other without departing from the gist of the present invention.

The present invention may also take the following configurations.
Item 1. A fire-resistant molded object comprising a thermoplastic resin or an elastomer, and thermally expandable graphite,
   wherein when a section obtained by cutting the molded object in parallel to the machine direction (MD) thereof is examined with a microscope having a magnification of 100 times, the difference between the longitudinal direction of each piece of the thermally expandable graphite present in the section and the MD of the molded object is ± 10° or less.
Item 2. The fire-resistant molded object according to Item 1, wherein the number of blisters having a length of 1 mm or more in a 25-cm² area is 3 or less.
Item 3. The fire-resistant molded object according to Item 1 or 2, wherein the expansion rate is 15 times or more.
Item 4. The fire-resistant molded object according to any one of Items 1 to 3, wherein the fire-resistant molded object comprises 3 to 300 parts by weight of the thermally expandable graphite, 3 to 300 parts by weight of a salt of phosphorus oxo acid, and 1 to 300 parts by weight of an inorganic filler, per 100 parts by weight of the thermoplastic resin or the elastomer.
Item 5. The fire-resistant molded object according to any one of Items 1 to 3, wherein the fire-resistant molded object comprises 5 to 300 parts by weight of the thermally expandable graphite, 5 to 300 parts by weight of a salt of phosphorus oxo acid, and 30 to 400 parts by weight of an inorganic filler, per 100 parts by weight of the thermoplastic resin or the elastomer.
Item 6. The fire-resistant molded object according to any one of Items 1 to 5, wherein the elastomer is EPDM or TPO.
Item 7.
   The fire-resistant molded object according to Items 1 to 6, wherein the thermoplastic resin is polyvinyl chloride resin, chlorinated polyvinyl chloride resin, an ethylene-vinyl acetate copolymer, or a combination thereof.
Item 8.
   The fire-resistant molded object according to Items 1 to 5, wherein the fire-resistant molded object is at least one member selected from the group consisting of polyvinyl chloride resin, chlorinated polyvinyl chloride resin, ethylene-vinyl acetate copolymers, ethylene propylene diene rubber (EPDM), chloroprene rubber (CR), thermoplastic elastomers (TPE), and silicone rubber.
Item 9. The fire-resistant molded object according to any one of Items 1 to 8, wherein the fire-resistant molded object further comprises a salt of phosphorus oxo acid.
Item 10. The fire-resistant molded object according to Item 9, wherein the salt of phosphorus oxo acid is phosphite.
Item 11. The fire-resistant molded object according to any one of Items 1 to 8, wherein the fire-resistant molded object has a thickness of 1.5 mm or less.
Item 12. A molded article comprising the fire-resistant molded object according to any one of Items 1 to 11.
Item 13. A molded article comprising an expandable fire-resistant molded object, which is the fire-resistant molded object according to any one of Items 1 to 11, and a non-expandable molded object.
Item 14. The molded article according to Item 13, wherein the non-expandable molded object comprises a resin, an elastomer, or a combination thereof.
Item 15. The molded article according to Item 14, wherein the resin in the non-expandable molded object is a thermoplastic resin or a thermosetting resin.
Item 16. The molded article according to Item 15, wherein the thermoplastic resin in the non-expandable molded object is at least one member selected from the group consisting of polyvinyl chloride resin, chlorinated polyvinyl chloride resin, ethylene-vinyl acetate copolymers, fluororesin, polyphenylene ether, modified polyphenylene ether, polyphenylene sulphide, polycarbonate, polyether imide, polyether ether ketone, polyarylate, polyamide, polyamide imide, polybutadiene, polyimide, acrylic resin, polyacetal, polyamide, polyethylene, polyethylene terephthalate, polycarbonate, polyester, polystyrene, polyphenylene sulfide, polybutylene terephthalate, polypropylene, ABS resin, and AS resin.
Item 17. The molded article according to Item 15, wherein the thermosetting resin in the non-expandable molded object is at least one member selected from the group consisting of epoxy resins, phenol resins, melamine resins, urea resins, unsaturated polyester resins, alkyd resins, polyurethane, and thermosetting polyimide.
Item 18. The molded article according to Item 15, wherein the elastomer in the non-expandable molded object is at least one member selected from the group consisting of rubbers and thermoplastic elastomers (TPE).
Item 19. The molded article according to Item 15, wherein the non-expandable molded object comprises at least one member selected from the group consisting of polyvinyl chloride resin, chlorinated polyvinyl chloride resin, ethylene-vinyl acetate copolymers, ethylene propylene diene rubber (EPDM), chloroprene rubber (CR), thermoplastic elastomers (TPE), and silicone rubber.
Item 20. The molded article according to any one of Items 12 to 19, wherein the molded article is a construction gasket.
Item 21. The molded article according to any one of Items 12 to 20, wherein the molded article is an extrusion molded article.

The present invention is detailed below with reference to Examples; however, the present invention is not limited thereto.

### Examples

### 1. Production of Fire-Resistant Molded Objects

### (Fire-Resistant Molded Objects of Example 1 and Comparative Examples 1 and 2)

The following materials were mixed using a pressure kneader to form a fire-resistant composition:
100 parts by weight of EPDM (EP35, JSR Corporation),
130 parts by weight of thermally expandable graphite (GREP-EG, Tosoh Corporation),
110 parts by weight of aluminum phosphite,
55 parts by weight of process oil (PW90, Idemitsu Kosan Co., Ltd.),
30 parts by weight of carbon black (#55G, Asahi Carbon Co., Ltd.),
1.5 parts by weight of stearic acid,
7 parts by weight of zinc oxide,
1.5 parts by weight of sulfur, and
3.0 parts by weight of a vulcanization accelerator (EM-7, Sanshin Chemical Industry Co., Ltd.).

Using two extruders, the fire-resistant composition and an EPDM sponge material were co-extruded to form a fire-resistant molded object of Example 1, which is shown in Fig. 1. In Fig. 1, the protrusion 13 is made of the EPDM sponge material, and the main body 12 is made of the fire-resistant composition. The length and the width at the top side thereof are 1000 mm and 20 mm, respectively; and the thickness at the thermally expanded portion is 1.2 mm.

Using the same materials as in Example 1, press molding was performed at 160°C and 19 MPa for 15 minutes to form a sheet of a fire-resistant molded object of Comparative Example 1 having a length of 170 mm, a width of 170 mm, and a thickness of 1.5 mm.

Using the same materials as in Example 1, calendar molding was performed at 160°C to form a sheet of a fire-resistant molded object of Comparative Example 2 having the same size as Comparative Example 1.

### (Fire-Resistant Molded Objects of Example 2 and Comparative Example 3)

The following materials were mixed using a pressure kneader to form a fire-resistant composition:
100 parts by weight of TPO (Esupo Rex 822, Sumitomo Chemical Co., Ltd.),
40 parts by weight of thermally expandable graphite (CA-60, Air Water Inc.),
15 parts by weight of carbon black (#55G, Asahi Carbon Co., Ltd.), and
50 parts by weight of aluminum phosphite.

In a manner similar to Example 1, using two extruders, the fire-resistant composition and a TPO compound (1504B, JSR) were co-extruded to form a fire-resistant molded object of Example 2, which is shown in Fig. 1.

Using the same materials as in Example 2, press molding was performed at 160°C and 19 MPa for 15 minutes to form a sheet of a fire-resistant molded object of Comparative Example 3 having a length of 170 mm, a width of 170 mm, and a thickness of 1.5 mm.

### (Fire-Resistant Molded Objects of Example 3 and Comparative Example 4)

The following materials were mixed using a pressure kneader to form a fire-resistant composition, and extrusion molding was performed in the same manner as in Example 1 to form a fire-resistant molded object of Example 3:
100 parts by weight of a chlorinated polyvinyl chloride resin (HA-53K, Tokuyama Sekisui Co., Ltd.),
100 parts by weight of thermally expandable graphite (GREP-EG, Tosoh Corporation),
55 parts by weight of DIDP (J-Plus Co., Ltd.),
20 parts by weight of polymethyl methacrylate (P530A, Mitsubishi Rayon Co., Ltd.),
3 parts by weight of a Ca-Zn-based heat stabilizer (NT 231, Mizusawa Industrial Chemicals, Ltd.), and
15 parts by weight of calcium carbonate (WHITON BF300, Shiraishi Calcium Kaisha, Ltd.).

Using the same materials as in Example 3, press molding was performed at 160°C and 19 MPa for 15 minutes to form a sheet of a fire-resistant molded object of Comparative Example 4 having a length of 170 mm, a width of 170 mm, and a thickness of 1.5 mm.

### (Fire-Resistant Molded Objects of Example 4 and Comparative Example 5)

The following materials were mixed using a pressure kneader to form a fire-resistant composition, and extrusion molding was performed in the same manner as in Example 1 to form a fire-resistant molded object of Example 4:
100 parts by weight of ethylene-vinyl acetate resin (UF 420, Mitsubishi Chemical Corporation),
40 parts by weight of thermally expandable graphite (CA-60, Air Water Inc.),
15 parts by weight of calcium carbonate (WHITON BF300, Shiraishi Calcium Kaisha, Ltd.), and
50 parts by weight of aluminum phosphite.

Using the same materials as in Example 4, press molding was performed at 160°C and 19 MPa for 15 minutes to form a sheet of a fire-resistant molded object of Comparative Example 5 having a length of 170 mm, a width of 170 mm, and a thickness of 1.5 mm.

### 2. Observation of Orientation of Expandable Graphite

Each of the fire-resistant molded objects of Examples 1 and 2 and the sheets of fire-resistant molded objects of Examples 3 and 4 and Comparative Examples 1 to 5 was cut in parallel to the MD, and was observed by using a microscope having a magnification of 100 times, thereby measuring the angle of expandable graphite relative to the MD of the sheet. The angles of all of the expandable graphites with a size of 50 µm or more appearing on the observation screen were measured, and the average thereof was calculated. When the number of expandable graphites on the observation screen was 10 or less, another section including 10 or more expandable graphites was observed, thereby calculating the angle.

### 3. Observation of Sheet Surface

Appearance of each of the fire-resistant molded objects of Examples 1 and 2 and the of fire-resistant molded objects of Examples 3 and 4 and Comparative Examples 1 to 5 was observed to measure the number of blisters in a 25-cm² area.

### 4. Measurement of Expansion Rate

Regarding the molded objects of Examples 1 and 2, the cross-section area of the expanded portion was measured before a heating test. The molded object was then subjected to the heating test in which heating was performed at 600°C for 30 minutes to measure the cross-section area obtained after the heating test, thus obtaining the expansion rate.

Regarding the sheets of fire-resistant molded objects of Examples 3 and 4 and Comparative Examples 1 to 5, the expansion rate, which is the rate of the average of the thicknesses measured at the three points of the residue obtained after the heating test to the average of the thicknesses measured at the three points of the sheet before the heating test, was measured.

### 5. Examination Result

As shown in Fig. 6, it was found that the expandable graphite in the extrusion molded object of Example 1 was more accurately oriented in the MD in comparison with that in the press molded sheet of Comparative Example 1. This was also obvious from microscope observation. Further, the molded object of Example 1 had a thickness (1.2 mm) thinner than that of Comparative Example 1, and attained a high sheet expansion rate. Moreover, blisters were not observed on the surface of the extrusion molded object of Example 1, and the appearance of the sheet was good.

Table 1 shows the experimental results of Examples 2 to 4 and Comparative Examples 2 to 5. The results similarly showed that the expandable graphite in the extrusion molded objects of Examples 2 to 4 was more accurately oriented in the MD in comparison with that in the calendar molded sheet and the press molded sheets of Comparative Examples 2 to 5, and attained a high expansion rate. It was also found that the number of blisters in the extrusion molded objects of Examples 2 to 4 was less than that in the calender/press molded objects of Comparative Examples 2 to 5, thus exhibiting good appearance.

**Table 1**

| Experimental Results of Examples 2 to 4 and Comparative Examples of 2 to 5 | | | | |
|---|---|---|---|---|
| | Process | Orientation degree | Expansion rate | Blisters |
| Example 2 | Extrusion molding | ± 1.2° | 16 times | 0 in 25-cm² area |
| Example 3 | Extrusion molding | ± 1.5° | 31 times | 2 in 25-cm² area |
| Example 4 | Extrusion molding | ± 1.4° | 18 times | 1 in 25-cm² area |
| Comparative Example 2 | Calendar molding | ± 11.5° | 19 times | 4 in 25-cm² area |
| Comparative Example 3 | Press molding | ± 78° | 13 times | 5 in 25-cm² area |
| Comparative Example 4 | Press molding | ± 70° | 25 times | 7 in 25-cm² area |
| Comparative Example 5 | Press molding | ± 75° | 15 times | 4 in 25-cm² area |

## Claims

1. A fire-resistant molded object comprising a thermoplastic resin or an elastomer, and thermally expandable graphite,
wherein when a section obtained by cutting the molded object in parallel to the machine direction (MD) thereof is examined with a microscope having a magnification of 100 times, the difference between the longitudinal direction of each piece of the thermally expandable graphite present in the section and the MD of the molded object is ± 10° or less.

2. The fire-resistant molded object according to claim 1, wherein the number of blisters having a length of 1 mm or more in a 25-cm² area is 3 or less.

3. The fire-resistant molded object according to claim 1 or 2, wherein the expansion rate is 15 times or more.

4. The fire-resistant molded object according to any one of claims 1 to 3, wherein the fire-resistant molded object comprises 3 to 300 parts by weight of the thermally expandable graphite, 3 to 300 parts by weight of a salt of phosphorus oxo acid, and 1 to 300 parts by weight of an inorganic filler, per 100 parts by weight of the thermoplastic resin or the elastomer.

5. The fire-resistant molded object according to any one of claims 1 to 4, wherein the elastomer is EPDM or TPO.

6. The fire-resistant molded object according to claims 1 to 5, wherein the thermoplastic resin is polyvinyl chloride resin, chlorinated polyvinyl chloride resin, an ethylene-vinyl acetate copolymer, or a combination thereof.

7. The fire-resistant molded object according to any one of claims 1 to 6, wherein the fire-resistant molded object further comprises a salt of phosphorus oxo acid.

8. The fire-resistant molded object according to claim 7, wherein the salt of phosphorus oxo acid is phosphite.

9. The fire-resistant molded object according to any one of claims 1 to 6, wherein the fire-resistant molded object has a thickness of 1.5 mm or less.

10. A molded article comprising the fire-resistant molded object according to any one of claims 1 to 9.

11. The molded article according to claim 10, wherein the molded article is a construction gasket.

12. The molded article according to claim 10 or 11, wherein the molded article is an extrusion molded article.
